(19) Europäisches Patentamt
European Patent Office
Office européen des brevets

(11) **EP 4 734 440 A1**

(12) **EUROPEAN PATENT APPLICATION**

(43) Date of publication:
**29.04.2026 Bulletin 2026/18**

(21) Application number: **24222371.7**

(22) Date of filing: **20.12.2024**

(51) International Patent Classification (IPC):
*H04L 9/32* (2006.01)    *H04L 9/00* (2022.01)

(52) Cooperative Patent Classification (CPC):
**H04L 9/3218; H04L 9/50**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **25.10.2024 KR 20240147706**

(71) Applicant: **Zkrypto Inc
Seoul 04763 (KR)**

(72) Inventor: **OH, Hyun Ok
05502 Songpa-gu (KR)**

(74) Representative: **Buzzi, Notaro & Antonielli d'Oulx
S.p.A.
Corso Vittorio Emanuele II, 6
10123 Torino (IT)**

(54) **METHOD OF POLYNOMIAL COMMITMENT SCHEME USING RECURSIVE SUM-CHECK PROTOCOL AND SYSTEM PERFORMING THE SAME**

(57)    The technical idea of the present invention relates to a Polynomial Commitment Scheme using a Recursive Sum-Check Protocol and a system performing the same. The Polynomial Commitment Scheme according to at least one embodiment of the present disclosure, performed by at least one processor, may include performing a first verification on a first target matrix corresponding to the coefficients of a polynomial; obtaining a second target matrix by extracting a portion of matrices used in the first verification; performing a second verification on the second target matrix; generating a commitment value using the second target matrix; and transmitting the commitment value for zero-knowledge proof of the polynomial.

## FIG. 4

EP 4 734 440 A1

# EP 4 734 440 A1

**Description**

CROSS-REFERENCE TO RELATED APPLICATION

This application claims priority to and the benefit of Korean Patent Application No. 10-2024-0147706, filed October 25, 2024, the disclosure of which is incorporated herein by reference in its entirety.

BACKGROUND

**Technical Field**

The present invention relates to a Polynomial Commitment Scheme using a Recursive Sum-Check protocol and a system for performing the same.

**Background Technology**

The Polynomial Commitment Scheme (PCS) is a cryptographic technique used to prove and verify the integrity of calculations. It is widely used in blockchain, zero-knowledge proof (ZK Proof) systems, cryptocurrencies, zk-rollups, and other environments to ensure data reliability. This method provides a protocol that enables efficient commitment and verification of an evaluation result of a specific polynomial.

The Polynomial Commitment Scheme consists of commitment-evaluation/proof-verification steps. In the commitment step, a prover aims to prove to a verifier a specific polynomial f(x) and its evaluation value f(a). For this purpose, the prover commits to the polynomial f(x). The commitment is an encrypted value containing information about the polynomial, which may be used later to verify the evaluation value. In the evaluation/proof step, the prover calculates f(a), the verification result of the polynomial at the target point a, and provides the value to the verifier. The prover also provides an evaluation proof or commitment value so the verifier may determine whether the evaluation value is correct. In the verification step, the verifier compares the evaluation proof provided by the prover with the committed polynomial to determine whether f(a) is correct. In this process, the verifier may determine whether the evaluation result is correct using only the committed information and proof, without needing to know the entire polynomial.

This type of Polynomial Commitment Scheme encounters a problem as the polynomial degree N increases, which leads to longer time requirements for verification and proof. Accordingly, efforts to reduce the time for verification and proof in the Polynomial Commitment Scheme have been ongoing.

SUMMARY

**Technical Problem**

An object of the present invention is to provide a Polynomial Commitment Scheme using a Recursive Sum-Check Protocol.

Another object of the present invention is to provide a Polynomial Commitment Scheme using tensor code and multilinear extensions.

**Technical Solution**

In an embodiment of the present disclosure, a Polynomial Commitment Scheme using a Recursive Sum-Check Protocol, performed by at least one processor, may include: performing a first verification on a first target matrix corresponding to coefficients of a polynomial; obtaining a second target matrix by extracting at least a portion of matrices used in the first verification; performing a second verification on the second target matrix; generating a commitment value using the second target matrix; transmitting the commitment value for zero-knowledge proof of the polynomial.

In an embodiment, the performing the first verification may include: generating a first encoding matrix by encoding the first target matrix; generating a first folding target matrix by folding the first target matrix; generating a first folding encoding matrix by folding the first encoding matrix; performing verification on the first target matrix by comparing an encoded value of the first folding target matrix with the first folding encoding matrix.

In an embodiment, the generating the first folding encoding matrix may include: extracting a plurality of first unit encoding matrices from the first encoding matrix; generating at least a portion of the first folding encoding matrix by folding the plurality of first unit encoding matrices.

In an embodiment, the performing the verification on the first target matrix by comparing the encoded value of the first folding target matrix with the first folding encoding matrix may include: generating a plurality of unit encoding folding

2

target matrices by encoding at least one matrix included in the first folding target matrix; comparing the plurality of unit encoding folding target matrices with the at least a portion of the first folding encoding matrix; and determining the verification to be passed if result of the comparison matches.

In an embodiment, the first encoding matrix is calculated by multiplying the first target matrix by a first random matrix; the first folding target matrix is calculated by multiplying the first target matrix by a target point matrix, wherein the target point matrix serves as a verification target.

In an embodiment, the obtaining the second target matrix may include: obtaining a plurality of first unit random matrices corresponding to the plurality of first unit encoding matrices from the first random matrix; obtaining a first folding sub matrix by multiplying the first target matrix by a random point matrix, wherein the random point matrix is not a verification target; generating the second target matrix by using the plurality of first unit encoding matrices, the plurality of first unit random matrices, the first folding target matrix, and the first folding sub matrix.

In an embodiment, the Polynomial Commitment Scheme using the Recursive Sum-Check Protocol may further include: obtaining an N-th (N is a natural number of at least 3) target matrix by extracting at least a portion of matrices used in the second verification; performing an N-th verification on the N-th target matrix using tensor code; extracting at least a portion of matrices used in the N-th verification to obtain an N+1-th target matrix; determining whether size of the N+1-th target matrix is less than a predetermined value; if the size of the N+1-th target matrix exceeds or equals to the predetermined value, performing an N+1-th verification; if the size of the N+1-th target matrix is less than the predetermined value, generating the commitment value using the N+1-th target matrix.

In one embodiment, the performing the second verification may include: generating a second encoding matrix using the second target matrix and a second random matrix; generating a second folding target matrix using the second target matrix and a target point matrix; folding a plurality of second unit encoding matrices from the second encoding matrix, and verifying the second target matrix by comparing the folded second unit encoding matrix with the second folding target matrix.

In an embodiment, the obtaining the N+1-th target matrix may include: extracting a plurality of second unit random matrices corresponding to the plurality of second unit encoding matrices from the second random matrix; and generating the N+1-th target matrix using the plurality of second unit encoding matrices, the plurality of second unit random matrices, and the second folding target matrix.

In an embodiment, the generating the commitment value using the N+1-th target matrix may include generating the commitment value by applying a plurality of element values of the N+1-th target matrix to a Merkle Hash Tree.

In a computer-readable storage medium storing a Polynomial Commitment Scheme according to an embodiment of the present disclosure, the Polynomial Commitment Scheme may include: performing a first verification on a first target matrix corresponding to coefficients of a polynomial; obtaining a second target matrix by extracting at least a portion of matrices used in the first verification; performing a second verification on the second target matrix; generating a commitment value using at least a portion of matrices used in the second verification; proving the commitment value using a zero-knowledge proof method.

BRIEF DESCRIPTION OF THE DRAWINGS

FIG. 1 is a block diagram illustrating a system according to an exemplary embodiment.
FIG. 2 is a flowchart illustrating a Polynomial Commitment Scheme according to an exemplary embodiment.
FIGS. 3A to 3C illustrate code for a Polynomial Commitment Scheme according to an exemplary embodiment.
FIG. 4 is a flowchart illustrating a Polynomial Commitment Scheme according to an exemplary embodiment.
FIGS. 5 to 8 are block diagrams illustrating a Polynomial Commitment Scheme according to exemplary embodiments.
FIG. 9 is a block diagram illustrating a computing system according to an exemplary embodiment.

DETAILED DESCRIPTION

Hereinafter, exemplary embodiments of the present disclosure will be described in detail with reference to the accompanying drawings. Advantages and features of the present disclosure, and methods of achieving the advantages and features will become apparent with reference to embodiments described below in detail in conjunction with the accompanying drawings. However, the technical spirit of the present invention is not limited to the following embodiments, but may be implemented in various different forms, and the following embodiments are provided only to complete the technical spirit of the present invention and to fully inform those skilled in the art to which the present invention pertains of the scope of the present invention, and the technical spirit of the present invention is only defined by the scope of claims.

It should be noted that, in adding reference numerals to elements of each drawing, the same elements are denoted by the same reference numerals as possible even though they are illustrated in different drawings. In addition, in describing the present disclosure, when it is determined that a detailed description of a related known configuration or function may obscure the gist of the present disclosure, the detailed description thereof will be omitted.

Unless otherwise defined, all terms (including technical and scientific terms) used herein have the same meaning as commonly understood by one of ordinary skill in the art to which the inventive concept belongs. In addition, terms defined in generally used dictionaries are not ideally or excessively interpreted unless they are clearly specifically defined. The terms used herein are for the purpose of describing the embodiments and are not intended to limit the present invention. In the present specification, a singular form includes a plural form unless otherwise specified.

In addition, in describing the components of the present disclosure, terms such as first, second, A, B, (a), (b), and the like may be used. The terms are only used to distinguish the elements from other elements, and the nature, order, or order of the corresponding elements is not limited by the terms. When it is described that a certain element is "connected", "coupled", or "connected" to another element, the element may be directly connected or connected to the other element, but it should be understood that another element may be "connected", "coupled", or "connected" between each element.

It will be further understood that the terms "comprises" and/or "comprising," when used in this specification, specify the presence of stated components, steps, operations, and/or elements, but do not preclude the presence or addition of one or more other components, steps, operations, and/or elements.

Components included in any one embodiment and components including common functions may be described using the same name in another embodiment. Unless otherwise stated, the description given in any one embodiment may also be applied to other embodiments, and specific descriptions may be omitted within a redundant range or a range that can be understood by those skilled in the art.

Hereinafter, some embodiments of the inventive concept will be described in detail with reference to the accompanying drawings.

Hereinafter, the present invention will be described in detail with reference to preferred embodiments of the present invention and the accompanying drawings.

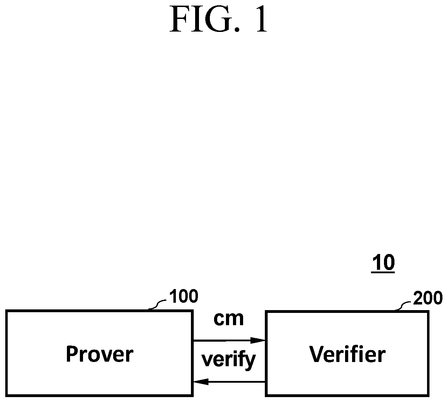

FIG. 1 is a block diagram illustrating a system according to an exemplary embodiment of the present disclosure.

Referring to FIG. 1, the system 10 is a system that performs a Polynomial Commitment Scheme, and the components included in the system 10 may consist of a plurality of terminals. In an example, a prover 100 and a verifier 200 may each be configured as at least one terminal, and the at least one terminal may include various communication-capable terminals such as a cellular phone, a smart phone, a laptop, a personal computer (PC), a navigation system, a personal communication system (PCS), a global system for mobile communications (GSM), a personal digital cellular (PDC), a personal handyphone system (PHS), a personal digital assistant (PDA), an international mobile telecommunication (IMT)-2000, a code division multiple access (CDMA)-2000, a W-code division multiple access (W-CDMA Wibro), a wireless broadband Internet terminal, a smart pad, a tablet PC, and the like. In another example, each of the prover 100 and the verifier 200 may be implemented as a server.

The prover 100 and the verifier 200 may be connected to each other through a network capable of communicating with each other by wire or wirelessly, and when they are connected by wire, the network may use a serial method, and when they are connected wirelessly, the network may communicate with each other using a wireless communication network. The wireless communication network includes a Local Area Network (LAN), a Wide Area Network (WAN), a World Wide Web (WWW), a wired/wireless data communication network, a telephone network, a wired/wireless television communication network, 3G, 4G, 5G, 3rd Generation Partnership Project (3GPP), 5th Generation Partnership Project (5GPP), Long Term Evolution (LTE), World Interoperability for Microwave Access (WIMAX), Wi-Fi, Internet, a Local Area Network (LAN), a Wireless Local Area Network (Wireless LAN), a Wide Area Network (WAN), a Personal Area Network (PAN), a Radio Frequency (RF), a Bluetooth network, a Near-Field Communication (NFC) network, a satellite broadcasting network, an analog broadcasting network, a Digital Broadcasting (DMB) network, a blockchain network, and the like, but is not limited thereto.

In the present specification, the operation of the system 10 and the operation of each component included in the system 10 may mean an operation performed by a processor included in each component, based on a computer program including at least one instruction stored in a storage device included in each component, and the storage device may include a non-volatile memory, a volatile memory, a flash memory, a hard disk drive (HDD), a solid state drive (SSD), or the like. The processor may include at least one of a central processing unit (CPU), a graphic processing unit (GPU), a neural processing unit (NPU), a random access memory (RAM), a read only memory (ROM), a system bus, and an application processor.

The prover 100 may perform proof on a polynomial and generate a commitment value cm that corresponds to the proof value. The verifier 200 may verify the commitment value cm using a zero-knowledge proof algorithm, ensuring that the prover 100 knows the polynomial without publishing contents of the polynomial.

According to an embodiment of the present disclosure, the prover 100 may perform a reduction on the target matrix when generating the commitment value cm, thereby reducing size of the target matrix. Consequently, the time and capacity required for proof and verification of the commitment value may be reduced.

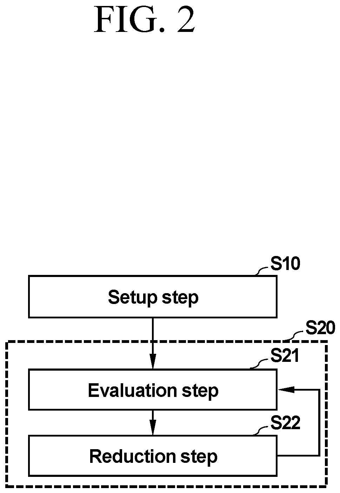

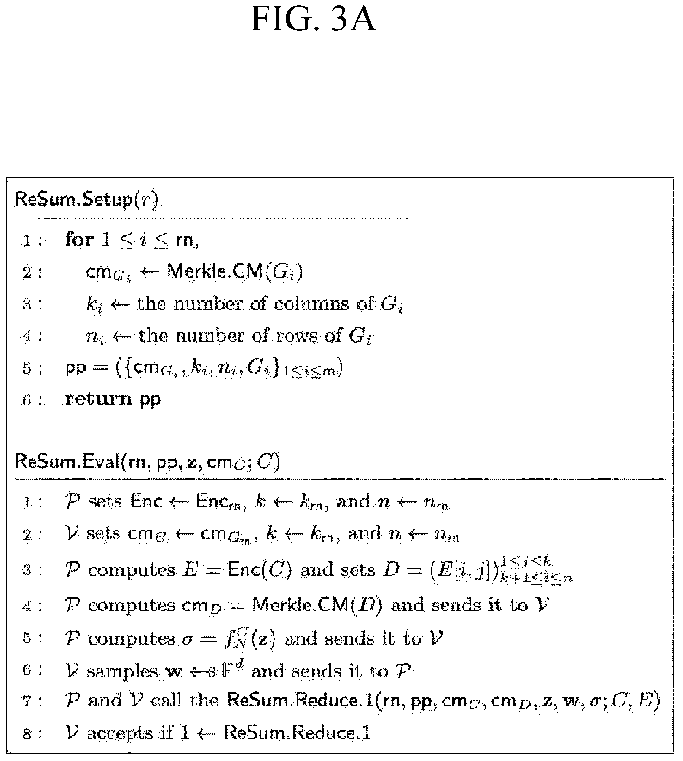

FIG. 2 is a flowchart illustrating a Polynomial Commitment Scheme according to an exemplary embodiment of the present disclosure, and FIGS. 3A to 3C illustrate code for a Polynomial Commitment Scheme according to an exemplary embodiment.

Referring to FIG. 2, the Polynomial Commitment Scheme according to the present invention relates to a Polynomial Commitment Protocol that ensures the security and efficiency of calculations using the Merkle Hash Tree Commitment and multilinear extensions. By recursively utilizing the Sum-Check Protocol, the protocol aims to reduce the verifier's complexity and reduce the proof size to a logarithmic scale. The protocol may primarily include a setup step S10 and a proof-verification step S20, where the proof-verification step S20 may consist of an evaluation step S21 and a reduction step S22.

Referring to FIG. 3A, the setup step S10 may generate common parameters and initial commitments required for an overall protocol. Specifically, size of the target matrix required for each round is set, and based on this, the random matrix necessary to generate the encoding matrix may be defined. The Merkle Hash Tree commitment for random matrices may be calculated, and the Merkle Hash Tree commitment of all matrices for each round, along with the dimensions and random matrices for each round, may be returned.

In the evaluation step S21, the prover and verifier initiate calculations by setting their initial values. The prover sets the encoding function, calculates the commitment value through the Merkle Hash Tree commitment, and sends the commitment value to the verifier. Additionally, the prover calculates a value at the evaluation point and sends the value to the verifier. The verifier samples a test point based on the value and sends it back to the prover. Both parties then perform the reduction step S22, and during this process, when the verifier receives a value of 1 as a result, the prover's proof is accepted, and receives a value of 0, the prover's proof is rejected.

The reduction step S22 may be divided into a first reduction Reduce1 and a second reduction Reduce2.

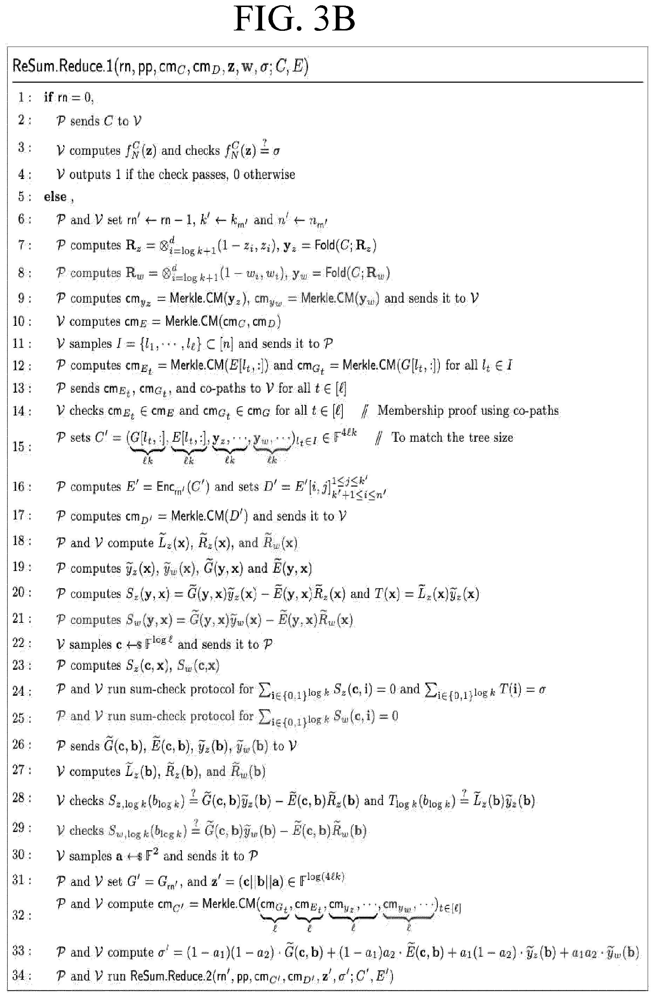

Referring to FIG. 3B, in the first reduction Reduce1, when the round number rn is '0,' the prover sends a target matrix C to the verifier. The verifier then uses the target matrix C and a target point matrix z to calculate the function value f(z). If the calculated value matches the result value $\sigma$, the verifier returns ' 1', otherwise, the verifier returns '0'. If the round number rn is greater than 0, the prover generates a random matrix R using either the target point matrix z or the random point matrix w. Subsequently, the prover folds the target matrix C to calculate the folding target matrix $y_z/y_w$. In this case, the target point matrix z is used for consistency verification, while the random point matrix w is used for proximity verification.

The prover calculates the commitment value for the folding target matrix yz/yw and sends it to the verifier, The verifier calculates the Merkle commitment for the encoding matrix E based on the commitment value. The verifier selects a set I consisting of different indices and requests the prover commitment values for the indices.

The prover defines a new target matrix C using the random matrix G, encoding matrix E, and folding target matrix yz/yw , encodes the target matrix C to generate a new encoding matrix E. The prover transmits the newly generated commitment value CM(D) to the verifier, and consistency and folding are verified using the Sum-Check Protocol. Each value used in verification is expanded into a multilinear polynomial, satisfying the conditions in the following Equation 1.

[Equation 1]

$$\text{Consistency:} \quad \sum_{\vec{y} \in \{0,1\}^{lo \pi l}} \sum_{\vec{x} \in \{0,1\}^{lo \pi k}} \widetilde{G}(\vec{x}, \vec{y}) \cdot \widetilde{y_z}(\vec{x}) - \widetilde{E}(\vec{x}, \vec{y}) \cdot \widetilde{R_z}(\vec{x}) = 0$$

$$\text{Proximity:} \quad \sum_{\vec{y} \in \{0,1\}^{lo \pi l}} \sum_{\vec{x} \in \{0,1\}^{lo \pi k}} \widetilde{G}(\vec{x}, \vec{y}) \cdot \widetilde{y_w}(\vec{x}) - \widetilde{E}(\vec{x}, \vec{y}) \cdot \widetilde{R_w}(\vec{x}) = 0$$

$$\text{Tensor Product:} \quad \sum_{\vec{x} \in \{0,1\}^{lo \pi k}} \widetilde{L_z}(\vec{x}) \cdot \widetilde{y_z}(\vec{x}) = \sigma$$

The prover and verifier verify these conditions using the Sum-Check Protocol, and once verification is complete, proceed to the next round. The verifier then uses commitment values for each value involved in verification to calculate new input value for the next round.

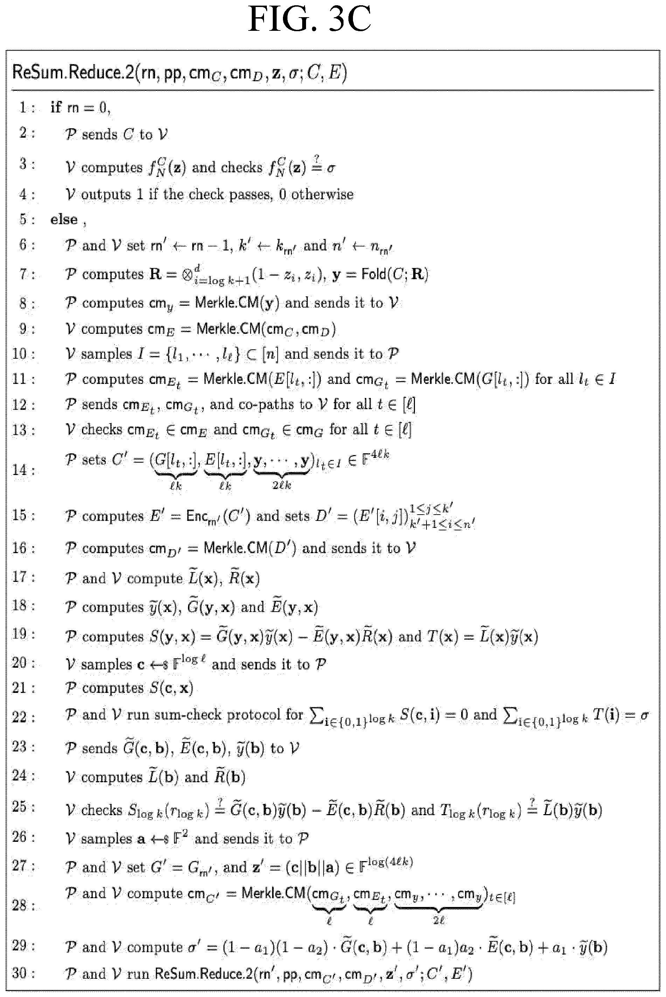

Referring to FIG. 3C, the second reduction Reduce2 may be performed. From the second round, where the second reduction Reduce2 is applied, proximity verification is omitted, and the focus is placed on consistency and tensor product verification for the target point matrix z. In this step, all processes related to the random point matrix w are omitted, and new input values are generated for each round.

According to the technical idea of this disclosure, by combining Recursive Sum-Check Protocol and Merkle Hash Tree Commitment, the complexity of the verifier may be reduced to a logarithmic scale, and the proof size may be also decreased to a logarithmic scale, making the system suitable for large-scale data processing. Consequently, a new solution may be provided that is field-independent, quantum-resistant, and capable of effective operation even in resource-constrained environments.

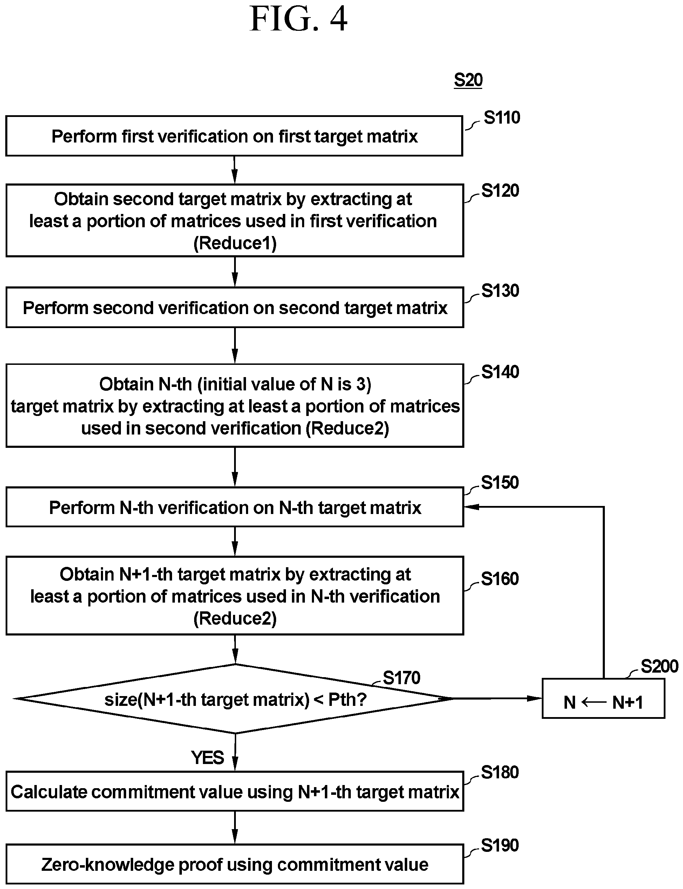

FIG. 4 is a flowchart illustrating a Polynomial Commitment Scheme according to an exemplary embodiment. Specifically, FIG. 4 provides a detailed view of the proof-verification step S20 in FIG. 2.

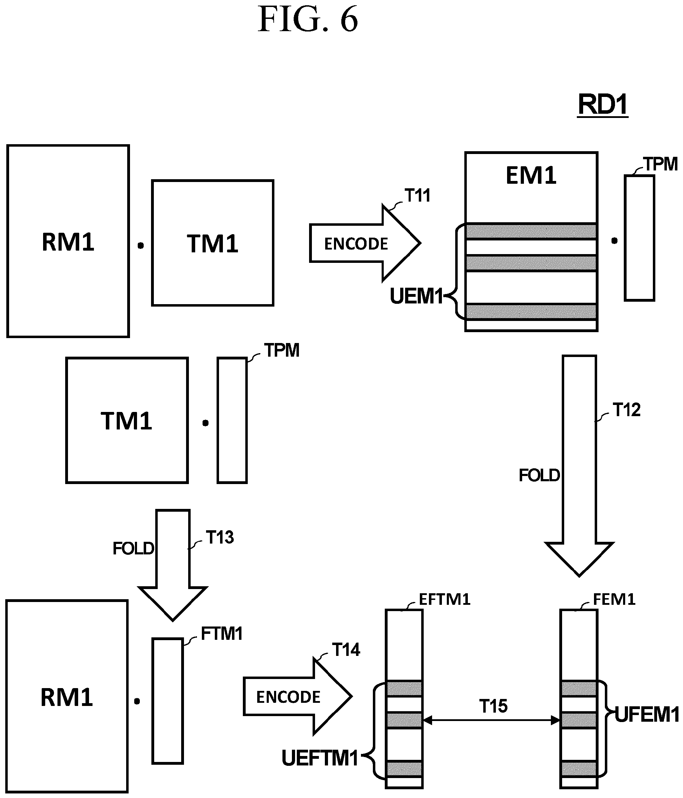

Referring to FIG. 4, the system 10 may perform a first verification on the first target matrix, step S110. In an embodiment, the first verification may be performed on the first target matrix based on the Sum-Check Protocol using tensor code. Detailed descriptions are further explained in FIG. 6.

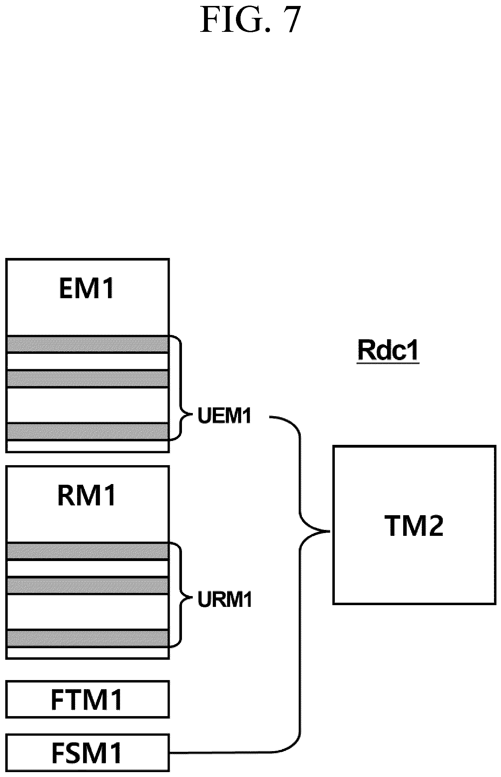

The system 10 may obtain a second target matrix by extracting at least a portion of matrices used in the first verification, step S120. In an embodiment, the system 10 may obtain the second target matrix using the first reduction Reduce1 described in FIG. 3B. Details about the first reduction are further explained in FIG. 7.

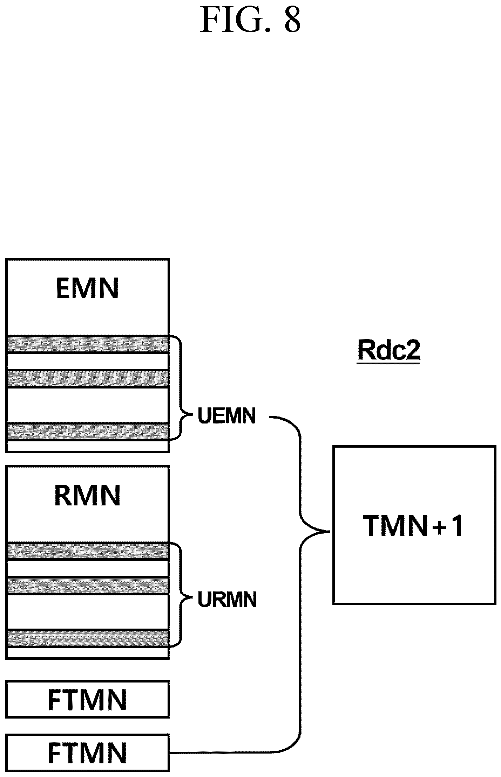

The system 10 may perform a second verification on the second target matrix, step S130. The system 10 may obtain an N-th target matrix by extracting at least a portion of matrices used in the second verification, step S140. At this time, the initial value for the round number N may be 3. In an embodiment, the system 10 may obtain the N-th target matrix using the second reduction Reduce2 described in FIG. 3C. Details about the second reduction are further explained in FIG. 8.

The system 10 may perform an N-th verification on the N-th target matrix, step S150. The system 10 may obtain an N+1-th target matrix by extracting at least a portion of matrices used in the N-th verification, step S160. Similar to step S140, the system 10 may obtain the N+1-th target matrix using the second reduction Reduce2 described in FIG 3C.

The system 10 may determine whether size of the N+1-th target matrix is smaller than a predetermined value Pth, step S170. If the size of the N+1-th target matrix is smaller than the predetermined value Pth, the system 10 may calculate a commitment value using the N+1-th target matrix, step S180, and perform zero-knowledge proof using the calculated commitment value, step S190. In an embodiment, the system 10 may obtain the commitment value by applying elements of the N+1-th target matrix to the Merkle Hash Tree.

If the size of the N+1-th target matrix is not smaller than the predetermined value Pth, the system 10 may increase the round number N and repeat the verification step, step S150, and reduction step, step S160, until the size of the target matrix becomes smaller than the predetermined value Pth, step S200.

According to an embodiment of this disclosure, by reducing the size of the target matrix through recursive verification and reduction in a Polynomial Commitment Scheme, the size of the commitment value required for zero-knowledge proof may be reduced. Consequently, the time and capacity required for zero-knowledge proof may be reduced.

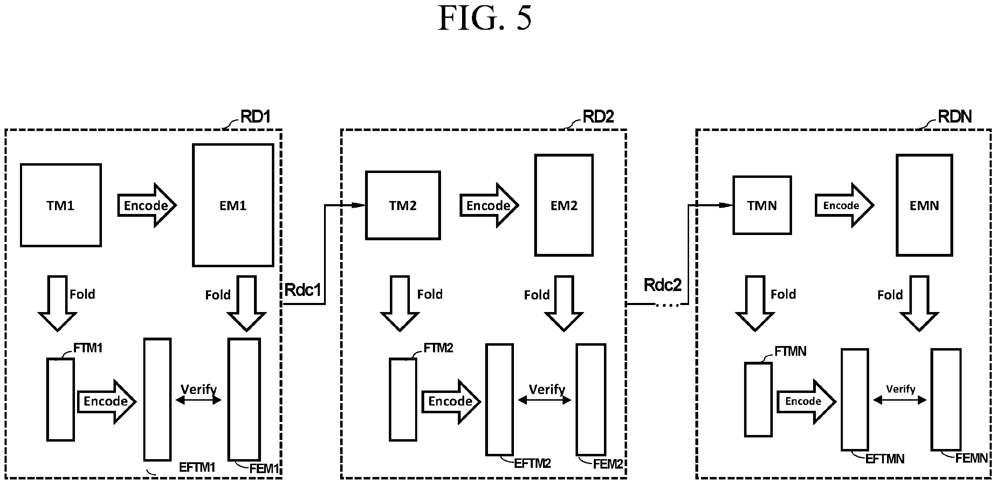

FIG. 5 is a block diagram illustrating a Polynomial Commitment Scheme according to an exemplary embodiment. Specifically, FIG. 5 shows the recursive verification and reduction process.

Referring to FIG. 5, the Polynomial Commitment Scheme may include a plurality of rounds RD1 to RDN, and verification and reduction in each round may occur.

In this specification, target matrix TM1 to TMN may correspond to coefficients of the polynomial and represent the matrix that serves as the verification target, encoding matrix EM1 to EMN may represent a matrix generated by encoding the target matrix TM1 to TMN, folding target matrix FTM1 to FTMN may represent a matrix generated by reducing the dimensions of the target matrix TM1 to TMN, folding encoding matrix FEM1 to FEMN may represent a matrix generated by reducing the dimensions of the encoding matrix EM1 to EMN, and encoding folding target matrix EFTM1 to EFTMN may represent a matrix generated by encoding the folding target matrix FTM1 to FTMN.

In a first round RD1, the system 10 may generate a first encoding matrix EM1 by encoding the first target matrix TM1 and generate a first folding encoding matrix FEM1 by folding the first encoding matrix EM1. Additionally, the system 10 may generate a first folding target matrix FTM1 by folding the first target matrix TM1 and generate a first encoding folding target matrix EFTM1 by encoding the first folding target matrix FTM1. The System 10 may perform verification on the first target matrix TM1 by comparing the first encoding folding target matrix EFTM1 with the first folding encoding matrix FEM1.

Upon completing verification, the system 10 may reduce the first target matrix TM1 to generate a second target matrix TM2, whose size is smaller than the first target matrix TM1. At this time, the first reduction described in FIG. 3 may be applied.

In the second round RD2, the system 10 may generate a second encoding matrix EM2 by encoding the second target matrix TM2 and generate a second folding encoding matrix FEM2 by folding the second encoding matrix EM2. Additionally, the system 10 may generate a second folding target matrix FTM2 by folding the second target matrix TM2 and generate a second encoding folding target matrix EFTM2 by encoding the second folding target matrix FTM2. The system 10 may perform verification on the second target matrix TM2 by comparing the second encoding folding target matrix EFTM2 with the second folding encoding matrix FEM2.

Upon completing verification, the system 10 may reduce the second target matrix TM2 to generate an N-th target matrix TMN, which is smaller in size than the second target matrix TM2. At this time, the second reduction described in FIG. 3 may be applied. The above verification and reduction may be repeated until the size of the N-th target matrix TMN is smaller than a predetermined value.

FIG. 6 is a block diagram illustrating a Polynomial Commitment Scheme according to an exemplary embodiment. Specifically, FIG. 6 shows the verification step in the first round RD1, which may be applied to other rounds as well. Referring to FIG. 6, in an encoding step T11, system 10 may generate a first encoding matrix EM1 by multiplying the first target matrix TM1 with a first random matrix RM1. In an embodiment, the first random matrix RM1 may include elements that are randomly determined values.

In a folding step T12, system 10 may generate a first folding encoding matrix FEM1 by multiplying the first encoding matrix EM1 with a target point matrix TPM. In an embodiment, system 10 may generate a plurality of first unit folding encoding matrices UFEM1 by multiplying a plurality of first unit encoding matrices UEM1, which constitute at least a predetermined portion rather than the entirety of the first encoding matrix EM1, with a target point matrix TPM. The system 10 may perform verification using the plurality of first unit folding encoding matrices UFEM1. In this specification, the target point matrix TPM may represent the point at which the polynomial is substituted as the verification target.

In a folding step T13, system 10 may generate a first folding target matrix FTM1 by multiplying the first target matrix TM1 with the target point matrix TPM. In an encoding step T14, system 10 may generate a first encoding folding target matrix EFTM1 by multiplying the first folding target matrix FTM1 with the first random matrix RM1.

In a verification step T15, system 10 may perform verification by comparing the first unit folding encoding matrix UFEM1 with the corresponding first unit encoding folding target matrix UEFTM1.

FIG. 7 is a block diagram illustrating a Polynomial Commitment Scheme according to an exemplary embodiment. Specifically, FIG. 7 illustrates a first reduction Rdc1 that occurs after the first round RD1.

Referring to FIG. 7, in the first reduction Rdc1, system 10 may extract the plurality of first unit encoding matrices UEM1 used in the verification from the first encoding matrix EM1 and extract the plurality of first unit random matrices URM1 corresponding to the positions of the plurality of first unit encoding matrices UEM1 from the first random matrix RM1. Additionally, system 10 may obtain the first folding target matrix FTM1 and a first folding sub matrix FSM1.

In an embodiment, the first folding target matrix FTM1 may be obtained by multiplying the first target matrix TM1 by the target point matrix TPM, and the first folding sub matrix FSM1 may be obtained by multiplying the first target matrix TM1 by a random point matrix corresponding to a random point that is not the verification target.

System 10 may generate a second target matrix TM2 using the plurality of first unit encoding matrices UEM1, the plurality of first unit random matrices URM1, the first folding target matrix FTM1, and the first folding sub matrix FSM1.

If the first target matrix TM1 is a $k \times k$ matrix and the number of unit encoding matrices is 1, the size of the second target matrix TM2 may be determined as 4lk. Thus, the size of the target matrix may be reduced from $k^2$ to 4lk. As a result, the size of the target matrix as the verification target may be reduced.

According to an embodiment of this disclosure, by reducing the size of the target matrix, the time required for the Polynomial Commitment Scheme may decrease to O(logN). As a result, the Polynomial Commitment may be performed in a quick time.

FIG. 8 is a block diagram illustrating a Polynomial Commitment Scheme according to an exemplary embodiment. Specifically, Figure 8 shows a second reduction Rdc2 that occurs after the second round RD2.

Referring to FIG. 8, in the second reduction Rdc2, system 10 may extract a plurality of N-th unit encoding matrices UEMN used in the verification from the N-th encoding matrix EMN and extract a plurality of N-th unit random matrices URMN corresponding to the positions of the plurality of N-th unit encoding matrices UEMN from an N-th random matrix RMN. Additionally, system 10 may obtain an N-th folding target matrix FTMN. System 10 may generate an N+1-th target matrix TMN+1 using the plurality of N-th unit encoding matrices UEMN, the plurality of N-th unit random matrices URMN, and the N-th folding target matrix FTMN.

According to an embodiment of this disclosure, in the second reduction Rdc2, the folding sub matrix is not used, unlike in the first reduction Rdc1, thereby reducing the operation time required for the reduction.

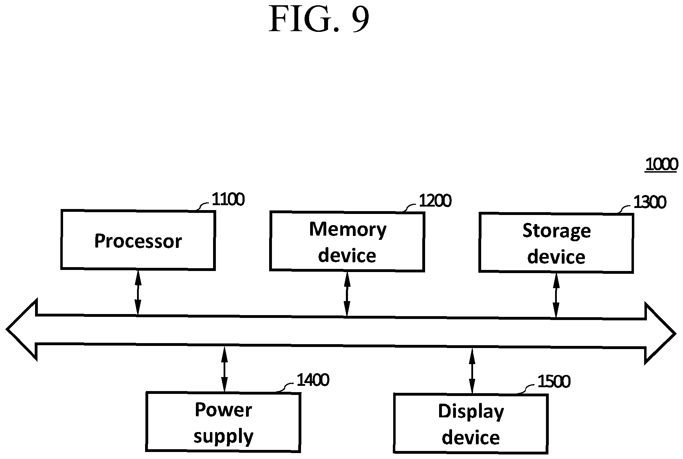

FIG. 9 is a block diagram illustrating a computing system according to an example embodiment.

Referring to FIG. 9, the computing system 1000 may configure any one of at least one component 100, 200 constituting the system 10, and may include a processor 1100, a memory device 1200, a storage device (or a computer-readable storage medium) 1300, a power supply 1400, and a display device 1500. Although not illustrated in FIG. 9, the computing system 1000 may further include ports that communicate with a video card, a sound card, a memory card, a universal serial bus (USB) device, or other electronic devices.

As described above, the processor 1100, the memory device 1200, the storage device 1300, the power supply 1400, and the display device 1500 included in the computing system 1000 may perform the Polynomial Commitment Scheme method according to example embodiments. In detail, the processor 1100 may perform the Polynomial Commitment Scheme method described with reference to FIGS. 1 to 8 by controlling the memory device 1200, the storage device 1300, the power supply 1400, and the display device 1500.

The processor 1100 may perform specific calculations or tasks. According to an embodiment, the processor 1100 may be a micro-processor or a Central Processing Unit (CPU). The processor 1100 may communicate with the memory device 1200, the storage device 1300, and the display device 1500 through a bus such as an address bus, a control bus, and a data bus. In an embodiment, the processor 1100 may be connected to an expansion bus such as a Peripheral Component Interconnect (PCI) bus.

The memory device 1200 may store data necessary for the operation of the computing system 1000. For example, the memory device 1200 may be implemented as a dynamic random access memory (DRAM), a mobile DRAM, a static random access memory (SRAM), a phase-change random access memory (PRAM), a ferroelectric random access memory (FRAM), a resistive random access memory (RRAM), and/or a magnetic random access memory (MRAM). The storage device 1300 may include a solid state drive (SDD), a hard disk drive (HDD), a CD-ROM, etc. The storage device 1300 (or the computer-readable storage medium) may store a program associated with the Polynomial Commitment Scheme method described with reference to FIGS. 1 to 8, application program data, system data, operating system data, etc.

The display device 1500 may be an output means for performing a notification with respect to a user, and may display and notify various types of information described in the present specification to a user or the like. The power supply 1400 may supply an operating voltage necessary for the operation of the computing system 1000.

According to the technical idea of the present invention, by applying a Polynomial Commitment Scheme that utilizes the Recursive Sum-Check Protocol, tensor code, and multilinear extension, it is possible to significantly reduce the size of the target matrix, allowing the verifier's calculation complexity to be reduced to $O(logN)$ and the size of the zero-knowledge proof verification target to be reduced to $O(logN)$. As a result, the time and resources required to perform the Polynomial Commitment Scheme may be reduced.

Exemplary embodiments have been invented in the drawings and the specification as described above. Although the embodiments have been described using specific terms in the present specification, they are used only for the purpose of describing the technical spirit of the present invention, and are not used to limit the meaning or limit the scope of the present invention described in Claims. Therefore, those of ordinary skill in the art will understand that various modifications and other equivalent embodiments are possible therefrom. Therefore, the true technical protection scope of the present invention should be defined by the technical spirit of the appended Claims.

## Claims

1. A method of Polynomial Commitment Scheme using a Recursive Sum-Check Protocol performed by at least one processor, comprising:

    performing a first verification on a first target matrix corresponding to coefficients of a polynomial;
    obtaining a second target matrix by extracting at least a portion of matrices used in the first verification;
    performing a second verification on the second target matrix;
    generating a commitment value using the second target matrix; and
    transmitting the commitment value for zero-knowledge proof of the polynomial.

2. The method of claim 1, wherein the performing the first verification comprises:

    generating a first encoding matrix by encoding the first target matrix;
    generating a first folding target matrix by folding the first target matrix;
    generating a first folding encoding matrix by folding the first encoding matrix; and
    performing verification on the first target matrix by comparing an encoded value of the first folding target matrix with the first folding encoding matrix.

3. The method of claim 2, wherein the generating the first folding encoding matrix comprises:

    extracting a plurality of first unit encoding matrices from the first encoding matrix; and
    generating at least a portion of the first folding encoding matrix by folding the plurality of first unit encoding matrices.

4. The method of claim 3, wherein the performing verification on the first target matrix by comparing the encoded value of the first folding target matrix with the first folding encoding matrix comprises:

    generating a plurality of first unit encoding folding target matrices by encoding at least one matrix included in the first folding target matrix;
    comparing the plurality of first unit encoding folding target matrices with the at least a portion of the first folding encoding matrix; and

determining the verification to be passed if result of the comparison matches.

5. The method of claim 3,

wherein the first encoding matrix is calculated by multiplying the first target matrix by a first random matrix, and wherein the first folding target matrix is calculated by multiplying the first target matrix by a target point matrix, wherein the target point matrix serves as a verification target.

6. The method of claim 5, wherein the obtaining the second target matrix comprises:

extracting a plurality of first unit random matrices corresponding to the plurality of first unit encoding matrices from the first random matrix;
obtaining a first folding sub matrix by multiplying the first target matrix by a random point matrix, wherein the random point matrix is not a verification target; and
generating the second target matrix by using the plurality of first unit encoding matrices, the plurality of first unit random matrices, the first folding target matrix, and the first folding sub matrix.

7. The method of claim 1, further comprising:

obtaining an N-th (N is a natural number of at least 3) target matrix by extracting at least a portion of matrices used in the second verification;
performing an N-th verification on the N-th target matrix using tensor code;
extracting at least a portion of matrices used in the N-th verification to obtain an N+1-th target matrix;
determining whether size of the N+1-th target matrix is less than a predetermined value;
if the size of the N+1-th target matrix exceeds or equals to the predetermined value, performing an N+1-th verification;
if the size of the N+1-th target matrix is less than to the predetermined value, generating the commitment value using the N+1-th target matrix.

8. The method of claim 7, wherein the performing the second verification comprises:

generating a second encoding matrix by using the second target matrix and a second random matrix;
generating a second folding target matrix by using the second target matrix and a target point matrix; and
folding a plurality of second unit encoding matrices from the second encoding matrix, and verifying the second target matrix by comparing the folded second unit encoding matrix with the second folding target matrix.

9. The method of claim 8, wherein the obtaining the N+1-th target matrix comprises:

extracting a plurality of second unit random matrices corresponding to the plurality of second unit encoding matrices from the second random matrix; and
generating the N+1-th target matrix using the plurality of second unit encoding matrices, the plurality of second unit random matrices, and the second folding target matrix.

10. The method of claim 7, wherein the generating the commitment value using the N+1-th target matrix comprises:
generating the commitment value by applying a plurality of element values of the N+1-th target matrix to a Merkle Hash Tree.

11. A computer-readable storage medium storing a Polynomial Commitment Scheme, wherein the Polynomial Commitment Scheme comprises:

performing a first verification on a first target matrix corresponding to coefficients of a polynomial;
obtaining a second target matrix by extracting at least a portion of matrices used in the first verification;
performing a second verification on the second target matrix;
generating a commitment value using at least a portion of matrices used in the second verification; and
proving the commitment value using a zero-knowledge proof method.

# FIG. 1

# FIG. 2

```
                                              S10
         ┌──────────────────────────────┐
         │          Setup step          │
         └──────────────────────────────┘
                        │                     S20
         ┌ ─ ─ ─ ─ ─ ─ ─│─ ─ ─ ─ ─ ─ ─ ─ ─ ─ ┐
                        ▼                     S21
         │┌──────────────────────────────┐│
          │        Evaluation step        │◄──┐
         │└──────────────────────────────┘│   │
                        │                     S22│
         │┌──────────────────────────────┐│   │
          │        Reduction step         │───┘
         │└──────────────────────────────┘│
         └ ─ ─ ─ ─ ─ ─ ─ ─ ─ ─ ─ ─ ─ ─ ─ ─ ┘
```

# FIG. 3A

---

ReSum.Setup$(r)$

---

**for** $1 \leq i \leq \mathsf{rn}$,

   $\mathsf{cm}_{G_i} \leftarrow \mathsf{Merkle.CM}(G_i)$

   $k_i \leftarrow$ the number of columns of $G_i$

   $n_i \leftarrow$ the number of rows of $G_i$

$\mathsf{pp} = (\{\mathsf{cm}_{G_i}, k_i, n_i, G_i\}_{1 \leq i \leq \mathsf{rn}})$

**return** pp

---

ReSum.Eval$(\mathsf{rn}, \mathsf{pp}, \mathbf{z}, \mathsf{cm}_C; C)$

---

$\mathcal{P}$ sets $\mathsf{Enc} \leftarrow \mathsf{Enc}_{\mathsf{rn}}$, $k \leftarrow k_{\mathsf{rn}}$, and $n \leftarrow n_{\mathsf{rn}}$

$\mathcal{V}$ sets $\mathsf{cm}_G \leftarrow \mathsf{cm}_{G_{\mathsf{rn}}}$, $k \leftarrow k_{\mathsf{rn}}$, and $n \leftarrow n_{\mathsf{rn}}$

$\mathcal{P}$ computes $E = \mathsf{Enc}(C)$ and sets $D = (E[i,j])_{k+1 \leq i \leq n}^{1 \leq j \leq k}$

$\mathcal{P}$ computes $\mathsf{cm}_D = \mathsf{Merkle.CM}(D)$ and sends it to $\mathcal{V}$

$\mathcal{P}$ computes $\sigma = f_N^C(\mathbf{z})$ and sends it to $\mathcal{V}$

$\mathcal{V}$ samples $\mathbf{w} \leftarrow_\$ \mathbb{F}^d$ and sends it to $\mathcal{P}$

$\mathcal{P}$ and $\mathcal{V}$ call the $\mathsf{ReSum.Reduce.1}(\mathsf{rn}, \mathsf{pp}, \mathsf{cm}_C, \mathsf{cm}_D, \mathbf{z}, \mathbf{w}, \sigma; C, E)$

$\mathcal{V}$ accepts if $1 \leftarrow \mathsf{ReSum.Reduce.1}$

# FIG. 3B

---

$\mathsf{ReSum.Reduce.1}(\mathsf{rn}, \mathsf{pp}, \mathsf{cm}_C, \mathsf{cm}_D, \mathbf{z}, \mathbf{w}, \sigma; C, E)$

1: **if** $\mathsf{rn} = 0$,

2:    $\mathcal{P}$ sends $C$ to $\mathcal{V}$

3:    $\mathcal{V}$ computes $f_N^C(\mathbf{z})$ and checks $f_N^C(\mathbf{z}) \overset{?}{=} \sigma$

4:    $\mathcal{V}$ outputs 1 if the check passes, 0 otherwise

5: **else** ,

6:    $\mathcal{P}$ and $\mathcal{V}$ set $\mathsf{rn}' \leftarrow \mathsf{rn} - 1$, $k' \leftarrow k_{m'}$ and $n' \leftarrow n_{m'}$

7:    $\mathcal{P}$ computes $\mathbf{R}_z = \otimes_{i=\log k+1}^{d}(1 - z_i, z_i)$, $\mathbf{y}_z = \mathsf{Fold}(C; \mathbf{R}_z)$

8:    $\mathcal{P}$ computes $\mathbf{R}_w = \otimes_{i=\log k+1}^{d}(1 - w_i, w_i)$, $\mathbf{y}_w = \mathsf{Fold}(C; \mathbf{R}_w)$

9:    $\mathcal{P}$ computes $\mathsf{cm}_{y_z} = \mathsf{Merkle.CM}(\mathbf{y}_z)$, $\mathsf{cm}_{y_w} = \mathsf{Merkle.CM}(\mathbf{y}_w)$ and sends it to $\mathcal{V}$

10:    $\mathcal{V}$ computes $\mathsf{cm}_E = \mathsf{Merkle.CM}(\mathsf{cm}_C, \mathsf{cm}_D)$

11:    $\mathcal{V}$ samples $I = \{l_1, \cdots, l_\ell\} \subset [n]$ and sends it to $\mathcal{P}$

12:    $\mathcal{P}$ computes $\mathsf{cm}_{E_t} = \mathsf{Merkle.CM}(E[l_t, :])$ and $\mathsf{cm}_{G_t} = \mathsf{Merkle.CM}(G[l_t, :])$ for all $l_t \in I$

13:    $\mathcal{P}$ sends $\mathsf{cm}_{E_t}$, $\mathsf{cm}_{G_t}$, and co-paths to $\mathcal{V}$ for all $t \in [\ell]$

14:    $\mathcal{V}$ checks $\mathsf{cm}_{E_t} \in \mathsf{cm}_E$ and $\mathsf{cm}_{G_t} \in \mathsf{cm}_G$ for all $t \in [\ell]$    // Membership proof using co-paths

15:    $\mathcal{P}$ sets $C' = (\underbrace{G[l_t, :]}_{\ell k}, \underbrace{E[l_t, :]}_{\ell k}, \underbrace{\mathbf{y}_z, \cdots}_{\ell k}, \underbrace{\mathbf{y}_w, \cdots}_{\ell k})_{l_t \in I} \in \mathbb{F}^{4\ell k}$    // To match the tree size

16:    $\mathcal{P}$ computes $E' = \mathsf{Enc}_{m'}(C')$ and sets $D' = E'[i, j]_{k'+1 \leq i \leq n'}^{1 \leq j \leq k'}$

17:    $\mathcal{P}$ computes $\mathsf{cm}_{D'} = \mathsf{Merkle.CM}(D')$ and sends it to $\mathcal{V}$

18:    $\mathcal{P}$ and $\mathcal{V}$ compute $\tilde{L}_z(\mathbf{x})$, $\tilde{R}_z(\mathbf{x})$, and $\tilde{R}_w(\mathbf{x})$

19:    $\mathcal{P}$ computes $\tilde{y}_z(\mathbf{x})$, $\tilde{y}_w(\mathbf{x})$, $\tilde{G}(\mathbf{y}, \mathbf{x})$ and $\tilde{E}(\mathbf{y}, \mathbf{x})$

20:    $\mathcal{P}$ computes $S_z(\mathbf{y}, \mathbf{x}) = \tilde{G}(\mathbf{y}, \mathbf{x})\tilde{y}_z(\mathbf{x}) - \tilde{E}(\mathbf{y}, \mathbf{x})\tilde{R}_z(\mathbf{x})$ and $T(\mathbf{x}) = \tilde{L}_z(\mathbf{x})\tilde{y}_z(\mathbf{x})$

21:    $\mathcal{P}$ computes $S_w(\mathbf{y}, \mathbf{x}) = \tilde{G}(\mathbf{y}, \mathbf{x})\tilde{y}_w(\mathbf{x}) - \tilde{E}(\mathbf{y}, \mathbf{x})\tilde{R}_w(\mathbf{x})$

22:    $\mathcal{V}$ samples $\mathbf{c} \leftarrow_\$ \mathbb{F}^{\log \ell}$ and sends it to $\mathcal{P}$

23:    $\mathcal{P}$ computes $S_z(\mathbf{c}, \mathbf{x})$, $S_w(\mathbf{c}, \mathbf{x})$

24:    $\mathcal{P}$ and $\mathcal{V}$ run sum-check protocol for $\sum_{\mathbf{i} \in \{0,1\}^{\log k}} S_z(\mathbf{c}, \mathbf{i}) = 0$ and $\sum_{\mathbf{i} \in \{0,1\}^{\log k}} T(\mathbf{i}) = \sigma$

25:    $\mathcal{P}$ and $\mathcal{V}$ run sum-check protocol for $\sum_{\mathbf{i} \in \{0,1\}^{\log k}} S_w(\mathbf{c}, \mathbf{i}) = 0$

26:    $\mathcal{P}$ sends $\tilde{G}(\mathbf{c}, \mathbf{b})$, $\tilde{E}(\mathbf{c}, \mathbf{b})$, $\tilde{y}_z(\mathbf{b})$, $\tilde{y}_w(\mathbf{b})$ to $\mathcal{V}$

27:    $\mathcal{V}$ computes $\tilde{L}_z(\mathbf{b})$, $\tilde{R}_z(\mathbf{b})$, and $\tilde{R}_w(\mathbf{b})$

28:    $\mathcal{V}$ checks $S_{z, \log k}(b_{\log k}) \overset{?}{=} \tilde{G}(\mathbf{c}, \mathbf{b})\tilde{y}_z(\mathbf{b}) - \tilde{E}(\mathbf{c}, \mathbf{b})\tilde{R}_z(\mathbf{b})$ and $T_{\log k}(b_{\log k}) \overset{?}{=} \tilde{L}_z(\mathbf{b})\tilde{y}_z(\mathbf{b})$

29:    $\mathcal{V}$ checks $S_{w, \log k}(b_{\log k}) \overset{?}{=} \tilde{G}(\mathbf{c}, \mathbf{b})\tilde{y}_w(\mathbf{b}) - \tilde{E}(\mathbf{c}, \mathbf{b})\tilde{R}_w(\mathbf{b})$

30:    $\mathcal{V}$ samples $\mathbf{a} \leftarrow_\$ \mathbb{F}^2$ and sends it to $\mathcal{P}$

31:    $\mathcal{P}$ and $\mathcal{V}$ set $G' = G_{m'}$, and $\mathbf{z}' = (\mathbf{c}||\mathbf{b}||\mathbf{a}) \in \mathbb{F}^{\log(4\ell k)}$

32:    $\mathcal{P}$ and $\mathcal{V}$ compute $\mathsf{cm}_{C'} = \mathsf{Merkle.CM}(\underbrace{\mathsf{cm}_{G_t}}_{\ell}, \underbrace{\mathsf{cm}_{E_t}}_{\ell}, \underbrace{\mathsf{cm}_{y_z}, \cdots}_{\ell}, \underbrace{\mathsf{cm}_{y_w}, \cdots}_{\ell})_{t \in [\ell]}$

33:    $\mathcal{P}$ and $\mathcal{V}$ compute $\sigma' = (1 - a_1)(1 - a_2) \cdot \tilde{G}(\mathbf{c}, \mathbf{b}) + (1 - a_1)a_2 \cdot \tilde{E}(\mathbf{c}, \mathbf{b}) + a_1(1 - a_2) \cdot \tilde{y}_z(\mathbf{b}) + a_1 a_2 \cdot \tilde{y}_w(\mathbf{b})$

34:    $\mathcal{P}$ and $\mathcal{V}$ run $\mathsf{ReSum.Reduce.2}(\mathsf{rn}', \mathsf{pp}, \mathsf{cm}_{C'}, \mathsf{cm}_{D'}, \mathbf{z}', \sigma'; C', E')$

---

# FIG. 3C

---

**ReSum.Reduce.2$(\mathsf{rn}, \mathsf{pp}, \mathsf{cm}_C, \mathsf{cm}_D, \mathbf{z}, \sigma; C, E)$**

---

1:   **if** $\mathsf{rn} = 0$,

2:     $\mathcal{P}$ sends $C$ to $\mathcal{V}$

3:     $\mathcal{V}$ computes $f_N^C(\mathbf{z})$ and checks $f_N^C(\mathbf{z}) \overset{?}{=} \sigma$

4:     $\mathcal{V}$ outputs 1 if the check passes, 0 otherwise

5:   **else** ,

6:     $\mathcal{P}$ and $\mathcal{V}$ set $\mathsf{rn}' \leftarrow \mathsf{rn} - 1$, $k' \leftarrow k_{\mathsf{rn}'}$ and $n' \leftarrow n_{\mathsf{rn}'}$

7:     $\mathcal{P}$ computes $\mathbf{R} = \otimes_{i=\log k+1}^{d}(1 - z_i, z_i)$, $\mathbf{y} = \mathsf{Fold}(C; \mathbf{R})$

8:     $\mathcal{P}$ computes $\mathsf{cm}_y = \mathsf{Merkle.CM}(\mathbf{y})$ and sends it to $\mathcal{V}$

9:     $\mathcal{V}$ computes $\mathsf{cm}_E = \mathsf{Merkle.CM}(\mathsf{cm}_C, \mathsf{cm}_D)$

10:     $\mathcal{V}$ samples $I = \{l_1, \cdots, l_\ell\} \subset [n]$ and sends it to $\mathcal{P}$

11:     $\mathcal{P}$ computes $\mathsf{cm}_{E_t} = \mathsf{Merkle.CM}(E[l_t, :])$ and $\mathsf{cm}_{G_t} = \mathsf{Merkle.CM}(G[l_t, :])$ for all $l_t \in I$

12:     $\mathcal{P}$ sends $\mathsf{cm}_{E_t}$, $\mathsf{cm}_{G_t}$, and co-paths to $\mathcal{V}$ for all $t \in [\ell]$

13:     $\mathcal{V}$ checks $\mathsf{cm}_{E_t} \in \mathsf{cm}_E$ and $\mathsf{cm}_{G_t} \in \mathsf{cm}_G$ for all $t \in [\ell]$

14:     $\mathcal{P}$ sets $C' = (\underbrace{G[l_t, :]}_{\ell k}, \underbrace{E[l_t, :]}_{\ell k}, \underbrace{\mathbf{y}, \cdots, \mathbf{y}}_{2\ell k})_{l_t \in I} \in \mathbb{F}^{4\ell k}$

15:     $\mathcal{P}$ computes $E' = \mathsf{Enc}_{\mathsf{rn}'}(C')$ and sets $D' = (E'[i, j])_{k'+1 \le i \le n'}^{1 \le j \le k'}$

16:     $\mathcal{P}$ computes $\mathsf{cm}_{D'} = \mathsf{Merkle.CM}(D')$ and sends it to $\mathcal{V}$

17:     $\mathcal{P}$ and $\mathcal{V}$ compute $\widetilde{L}(\mathbf{x})$, $\widetilde{R}(\mathbf{x})$

18:     $\mathcal{P}$ computes $\widetilde{y}(\mathbf{x})$, $\widetilde{G}(\mathbf{y}, \mathbf{x})$ and $\widetilde{E}(\mathbf{y}, \mathbf{x})$

19:     $\mathcal{P}$ computes $S(\mathbf{y}, \mathbf{x}) = \widetilde{G}(\mathbf{y}, \mathbf{x})\widetilde{y}(\mathbf{x}) - \widetilde{E}(\mathbf{y}, \mathbf{x})\widetilde{R}(\mathbf{x})$ and $T(\mathbf{x}) = \widetilde{L}(\mathbf{x})\widetilde{y}(\mathbf{x})$

20:     $\mathcal{V}$ samples $\mathbf{c} \leftarrow_\$ \mathbb{F}^{\log \ell}$ and sends it to $\mathcal{P}$

21:     $\mathcal{P}$ computes $S(\mathbf{c}, \mathbf{x})$

22:     $\mathcal{P}$ and $\mathcal{V}$ run sum-check protocol for $\sum_{\mathbf{i} \in \{0,1\}^{\log k}} S(\mathbf{c}, \mathbf{i}) = 0$ and $\sum_{\mathbf{i} \in \{0,1\}^{\log k}} T(\mathbf{i}) = \sigma$

23:     $\mathcal{P}$ sends $\widetilde{G}(\mathbf{c}, \mathbf{b})$, $\widetilde{E}(\mathbf{c}, \mathbf{b})$, $\widetilde{y}(\mathbf{b})$ to $\mathcal{V}$

24:     $\mathcal{V}$ computes $\widetilde{L}(\mathbf{b})$ and $\widetilde{R}(\mathbf{b})$

25:     $\mathcal{V}$ checks $S_{\log k}(r_{\log k}) \overset{?}{=} \widetilde{G}(\mathbf{c}, \mathbf{b})\widetilde{y}(\mathbf{b}) - \widetilde{E}(\mathbf{c}, \mathbf{b})\widetilde{R}(\mathbf{b})$ and $T_{\log k}(r_{\log k}) \overset{?}{=} \widetilde{L}(\mathbf{b})\widetilde{y}(\mathbf{b})$

26:     $\mathcal{V}$ samples $\mathbf{a} \leftarrow_\$ \mathbb{F}^2$ and sends it to $\mathcal{P}$

27:     $\mathcal{P}$ and $\mathcal{V}$ set $G' = G_{\mathsf{rn}'}$, and $\mathbf{z}' = (\mathbf{c}||\mathbf{b}||\mathbf{a}) \in \mathbb{F}^{\log(4\ell k)}$

28:     $\mathcal{P}$ and $\mathcal{V}$ compute $\mathsf{cm}_{C'} = \mathsf{Merkle.CM}(\underbrace{\mathsf{cm}_{G_t}}_{\ell}, \underbrace{\mathsf{cm}_{E_t}}_{\ell}, \underbrace{\mathsf{cm}_y, \cdots, \mathsf{cm}_y}_{2\ell})_{t \in [\ell]}$

29:     $\mathcal{P}$ and $\mathcal{V}$ compute $\sigma' = (1 - a_1)(1 - a_2) \cdot \widetilde{G}(\mathbf{c}, \mathbf{b}) + (1 - a_1)a_2 \cdot \widetilde{E}(\mathbf{c}, \mathbf{b}) + a_1 \cdot \widetilde{y}(\mathbf{b})$

30:     $\mathcal{P}$ and $\mathcal{V}$ run ReSum.Reduce.2$(\mathsf{rn}', \mathsf{pp}, \mathsf{cm}_{C'}, \mathsf{cm}_{D'}, \mathbf{z}', \sigma'; C', E')$

# FIG. 4

S20

Perform first verification on first target matrix — S110

Obtain second target matrix by extracting at least a portion of matrices used in first verification (Reduce1) — S120

Perform second verification on second target matrix — S130

Obtain N-th (initial value of N is 3) target matrix by extracting at least a portion of matrices used in second verification (Reduce2) — S140

Perform N-th verification on N-th target matrix — S150

Obtain N+1-th target matrix by extracting at least a portion of matrices used in N-th verification (Reduce2) — S160

size(N+1-th target matrix) < Pth? — S170

N ← N+1 — S200

YES

Calculate commitment value using N+1-th target matrix — S180

Zero-knowledge proof using commitment value — S190

# FIG. 5

# FIG. 6

# FIG. 7

# FIG. 8

EMN

UEMN

RMN

URMN

FTMN

FTMN

Rdc2

TMN+1

# FIG. 9

Europäisches Patentamt

European Patent Office

Office européen des brevets

# EUROPEAN SEARCH REPORT

**Application Number**

EP 24 22 2371

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KASRA ABBASZADEH ET AL: "Zero-Knowledge Proofs of Training for Deep Neural Networks", IACR, INTERNATIONAL ASSOCIATION FOR CRYPTOLOGIC RESEARCH , vol. 20240718:163609 18 July 2024 (2024-07-18), pages 1-23, XP061088101, Retrieved from the Internet: URL:https://eprint.iacr.org/archive/2024/162/1721320569.pdf [retrieved on 2024-07-18] | 1,11 | INV. H04L9/32 H04L9/00 |
| A | * page 5 - page 11 * | 2-10 | |
| X | CN 118 590 240 A (UNIV JIANGSU) 3 September 2024 (2024-09-03) | 1,11 | |
| A | * abstract * | 2-10 | |
| X | YANPEI GUO ET AL: "DeepFold: Efficient Multilinear Polynomial Commitment from Reed-Solomon Code and Its Application to Zero-knowledge Proofs", IACR, INTERNATIONAL ASSOCIATION FOR CRYPTOLOGIC RESEARCH , vol. 20241008:150429 8 October 2024 (2024-10-08), pages 1-20, XP061090767, Retrieved from the Internet: URL:https://eprint.iacr.org/archive/2024/1595/1728399869.pdf [retrieved on 2024-10-09] | 1,11 | TECHNICAL FIELDS SEARCHED (IPC) H04L |
| A | * page 5 - page 13 * | 2-10 | |

The present search report has been drawn up for all claims

| Place of search | Date of completion of the search | Examiner |
|---|---|---|
| Munich | 3 June 2025 | Apostolescu, Radu |

EPO FORM 1503 03.82 (P04C01)

EP 4 734 440 A1

## ANNEX TO THE EUROPEAN SEARCH REPORT
## ON EUROPEAN PATENT APPLICATION NO.

EP 24 22 2371

This annex lists the patent family members relating to the patent documents cited in the above-mentioned European search report.
The members are as contained in the European Patent Office EDP file on
The European Patent Office is in no way liable for these particulars which are merely given for the purpose of information.

03-06-2025

| Patent document cited in search report | Publication date | Patent family member(s) | Publication date |
|---|---|---|---|
| CN 118590240 A | 03-09-2024 | NONE | |

For more details about this annex : see Official Journal of the European Patent Office, No. 12/82

EPO FORM P0459

22

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240147706